# EUROPÄISCHE PATENTSCHRIFT

(11) **EP 3 614 484 B1**
(45) Veröffentlichungstag und Bekanntmachung des Hinweises auf die Patenterteilung: **20.01.2021**
(21) Anmeldenummer: 19186303.4
(22) Anmeldetag: 15.07.2019
(51) Int. Cl.: H01M 10/44, H01M 10/42, H02J 7/00, B25F 5/00

(54) **VERFAHREN UND AKKUPACK MIT BATTERIEMANAGEMENTSYSTEM ZUM BETREIBEN DES AKKUPACKS**
METHOD AND BATTERY PACK WITH BATTERY MANAGEMENT SYSTEM FOR OPERATING THE BATTERY PACK
PROCÉDÉ ET BLOC D'ACCUMULATEUR AVEC SYSTÈME DE GESTION DE BATTERIE PERMETTANT DE FAIRE FONCTIONNER LE BLOC D'ACCUMULATEUR

(30) Priorität: 03.08.2018 DE 102018118967
(43) Veröffentlichungstag der Anmeldung: 26.02.2020
(73) Patentinhaber: Einhell Germany AG, 94405 Landau / Isar (DE)
(72) Erfinder: THANNHUBER, Markus, 94405 Landau (DE); STERNAD, Michael, 4020 Linz (AT)
(74) Vertreter: Hofstetter, Schurack & Partner

(56) Entgegenhaltungen:
- EP-A1- 3 336 954
- DE-A1-102015 002 070
- US-A1- 2013 221 916

## Beschreibung

Die Erfindung betrifft ein Verfahren gemäß dem Oberbegriff des Patentanspruchs 1 und ein Akkupack gemäß dem Oberbegriff des Patentanspruchs 12 mit einem Batteriemanagementsystem zum Betreiben des Akkupacks.

Ein derartiges Verfahren und ein derartiger Akkupack gehen beispielsweise aus der EP 3 336 954 A1 hervor.

Akkupacks für Elektrogeräte, zum Beispiel in Form von Elektrowerkzeugen, stationären Maschinen, Reinigungsgeräten, Gartengeräten und dergleichen sind vor allem für Privatanwender keine unerhebliche Investition. Akkupacks, beispielsweise auf Lithium-Ionen-Basis, weisen üblicherweise jedoch eine beschränkte Lebensdauer auf, die noch dazu sehr stark von den Gebrauchsgewohnheiten eines jeweiligen Benutzers abhängen. Viele Benutzer sind sich dieser Abhängigkeit vom Gebrauch überhaupt nicht bewusst.

Faktoren, welche die Lebenszeit eines Akkupacks beeinflussen, sind unter anderem die Lagertemperatur, die Spannungslage bei Lagerung, Tiefe der Zyklisierung, Geschwindigkeit des Ladeprozesses bei einer bestimmten Temperatur, Beanspruchung im Entladefall, Vibrationsbelastungen, Belastungen durch Stöße und dergleichen. Aufgrund des komplexen Zusammenspiels verschiedener Einflussfaktoren auf die Lebenszeit von Akkupacks ist es also für Benutzer schwer bis gar nicht überschaubar, wie ihr eigenes Verhalten zur Verringerung oder Verlängerung der Lebensdauer von Akkupacks beiträgt.

Aus Druckschrift US 2013/0221916 A1 ist ein elektrisches Fahrzeug bekannt, das über einen Betriebsmodus zur Optimierung der Batterielebensdauer verfügt. Weitere Modi zielen auf maximale Reichweite oder sportliche Fahreigenschaften. Die verschiedenen Modi werden von einem Fahrzeugsystemsteuergerät kontrolliert.

Druckschrift DE 10 2016 124 501 A1 offenbart einen konfigurierbaren Akkupack. Ein Akkuladeparameter ist an dem Akkupack mit Hilfe eines Schalters, Jumpers oder einer drahtlosen Schnittstelle konfigurierbar. Ein korrespondierender Akkuladeparameter wird von einem Batterie-Management-System für ein externes Ladegerät zur Verfügung gestellt. Das externe Ladegerät legt ein Ladeverfahren auf der Basis des Akkuladeparameters fest.

Im Dokument DE 10 2016 105 393 A1 ist eine thermische Batteriekonditionierung zur Verlängerung der Batterie-Nutzungsdauer in elektrifizierten Fahrzeugen beschrieben. Das Fahrzeugsystem wird so gesteuert, dass eine Verlängerung der Nutzungsdauer der Batteriegruppe möglich ist.

Es ist daher die Aufgabe der vorliegenden Erfindung, eine Lösung bereitzustellen, mittels welcher ein Benutzer auf einfache Weise Einfluss auf die Betriebsweise und Lebensdauer eines Akkupacks nehmen kann.

Diese Aufgabe wird durch ein Verfahren sowie durch einen Akkupack mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines (auswechselbaren) Akkupacks für ein Elektrowerkzeug, eine stationäre Maschine, ein Reinigungsgerät oder ein Gartengerät (nachfolgend auch kurz: zu versorgendes Gerät) werden mehrere unterschiedliche von einem Benutzer auswählbare Zielvorgaben betreffend den Akkupack bereitgestellt. Unter den Zielvorgaben sind verschiedene Cycle-Life-Konfigurationen zu verstehen, aus denen ein Benutzer wählen kann. Die Wahl kann der Benutzer beispielsweise über Schalter, Tasten oder anderweitige Auswahlmittel direkt am Akkupack oder am betreffenden Elektrogerät, in welchem der Akkupack eingesetzt wird, wählen. Alternativ oder zusätzlich ist es auch denkbar, dass der Benutzer eine entsprechende Zielvorgabe über eine Remote-Einstellung vornehmen kann, beispielsweise über eine Narrowband Iot-Verbindung oder über eine andere drahtlose Verbindung.

Vorzugsweise werden wenigstens folgende Zielvorgaben zur Auswahl bereitgestellt:
a) Maximierung der Lebensdauer des Akkupacks;
b) Maximierung der Leistung des Akkupacks;
c) Maximierung der Kapazität des Akkupacks;
d) ein ausgeglichener Betrieb, bei welchem zumindest zwei der zuvor genannten Zielvorgaben - also die Maximierung der Lebensdauer, deren Leistung und die Kapazität des Akkupacks - gleichermaßen erfüllt werden sollen.

Ein Benutzer des Akkupacks kann also auf einfache Weise wählen, mit welcher Zielvorgabe er gerade den Akkupack und somit ein Elektrogerät, in welchem der Akkupack eingesetzt wird, verwenden möchte. Sofern er beispielsweise besonderen Wert darauf legt, die Lebensdauer des Akkupacks zu maximieren, kann er die entsprechende Zielvorgabe auswählen. Ist es dem Benutzer hingegen beispielsweise augenblicklich oder auch dauerhaft wichtig, eine besonders große Leistung mittels des Akkupacks abrufen zu können, so kann er diese entsprechende Zielvorgabe wählen. Oder ist es dem Benutzer beispielsweise besonders wichtig, möglichst lange eine besonders hohe Kapazität beim Akkupack zur Verfügung zu haben, kann er diese entsprechende Zielvorgabe auswählen. Kann der Benutzer sich zum Beispiel nicht entscheiden, so kann er auch den ausgeglichenen Betrieb wählen, bei welchem zumindest zwei der Zielvorgaben hinsichtlich der Maximierung der Lebensdauer, der Leistung und der Kapazität des Akkupacks gleichermaßen erfüllt werden sollen. Natürlich ist es auch möglich, dass der ausgeglichene Betrieb bedeutet, dass ein möglichst guter Kompromiss hinsichtlich der Lebensdauer, der Leistung und der Kapazität des Akkupacks erzielt wird.

Zielvorgabenspezifisch - also je nachdem, was der Benutzer als Zielvorgabe ausgewählt hat - wird wenigstens ein Betriebsparameter des Akkupacks mittels eines Batteriemanagementsystems des Akkupacks eingestellt. Das Batteriemanagementsystem betreibt anschließend den Akkupack entsprechend des zielvorgabenspezifisch eingestellten Betriebsparameters. Mittels des erfindungsgemäßen Verfahrens wird einem Benutzer also die Möglichkeit bereitgestellt, aus unterschiedlichsten Zielvorgaben hinsichtlich des Akkupacks zu wählen, wobei das Batteriemanagementsystem des Akkupacks so ausgeprägt ist, dass ein direkter Eingriff einer gewählten Zielvorgabe in die Steuerung des Akkupacks ermöglicht wird.

Hierbei besitzt der Akkupack ein Gehäuse, innerhalb dessen sich das Batteriemanagementsystem befindet. Das in das Gehäuse des Akkupacks integrierte Batteriemanagementsystem steuert oder regelt den Akkupack selbstständig. Der Akkupack wird also bezüglich der ausgewählten Zielvorgabe nicht vollständig durch das jeweils angeschlossene Gerät gesteuert, sondern steuert oder regelt sich zumindest teilweise selbst. Der als auswechselbares Modul gestaltete Akkupack managt seine Parameterverwaltung somit zumindest hinsichtlich der ausgewählten Zielvorgabe ohne Einfluss des anzuschließenden Geräts. So kann beispielsweise die Zielvorgabe der Maximierung der Lebensdauer beim ,Anschluss des Akkupacks an ein Ladegerät eine andere Wirkung entfalten als beim Anschluss an ein Elektrowerkzeug. Im ersteren Fall wird z.B. die Ladeschlussspannung durch den Akkupack selbst herabgesetzt und im zweiteren Fall die Entladeschlussspannung durch den Akkupack selbst heraufgesetzt.

Jeder Akkupack steuert und/oder regelt seinen eigenen Betrieb individuell. Dies führt deswegen zu optimalen Ergebnissen, da jeder Akkupack seine eigenen Parameter in der Regel am besten "kennt", ohne dass es einer Kommunikation mit einem anderen Gerät bedarf. Insbesondere hängt der Betrieb des Akkupacks hinsichtlich der ausgewählten Zielvorgabe nicht von der Hardware oder Software des an den Akkupack angeschlossenen Geräts ab.

Der Akkupack besitzt ein eigenes Gehäuse und bildet somit ein auswechselbares Modul. Dieses Modul ist an dem zu versorgenden Gerät (werkzeuglos und lösbar) angesteckt. Hierzu besitzt das Gehäuse eine elektromechanische Schnittstelle. Dies bedeutet, dass die Schnittstelle zum einen die Funktion hat, elektrische Signale/Leistung zu übertragen und zum anderen den mechanischen Halt des Akkupacks an dem zu versorgenden Gerät zu gewährleisten. In einfacher Weise kann damit beispielsweise ein entladender Akkupack von dem zu versorgenden Gerät (z.B. Elektrowerkzeug) abgesteckt und stattdessen ein geladener Akkupack angesteckt werden.

Eine vorteilhafte Ausführungsform der Erfindung sieht vor, dass als Betriebsparameter wenigstens ein kalorischer Grenzwert eines Betriebs des Akkupacks, insbesondere eine maximal zulässige Zelltemperatur des Akkupacks, zielvorgabenspezifisch eingestellt wird. Kalorische Zustände jeweiliger Batteriezellen eines Akkupacks sind üblicherweise determiniert durch Oberflächentemperaturen an den jeweiligen Batteriezellen, Kerntemperaturen der jeweiligen Batteriezellen und durch ein sich einstellendes Gradientenfeld hinsichtlich der Temperatur der Batteriezellen beziehungsweise innerhalb der jeweiligen Zellen. Die kalorischen Grenzen können beispielsweise durch Überwachung jeweiliger Oberflächentemperaturen der jeweiligen Batteriezellen überwacht werden. Eine Überschreitung bestimmter Zelltemperaturen ist alleine schon aus Sicherheitsgründen zu unterbinden. Je nachdem, welche Zielvorgabe gewählt worden ist, kann zumindest ein kalorischer Grenzwert im Hinblick einer Betriebsweise beziehungsweise eines Betriebs des Akkupacks entsprechend angepasst werden. So können Oberflächentemperaturen oder auch Kerntemperaturen der jeweiligen Batteriezellen des Akkupacks überwacht werden, wobei je nach gewählter Zielvorgabe unterschiedliche Grenzwerte für die entsprechenden Temperaturen vorgegeben werden. Durch zielvorgabenspezifische Einstellungen beziehungsweise Anpassungen wenigstens eines kalorischen Grenzwerts im Hinblick eines Betriebs des Akkupacks können die jeweils gewählten Zielvorgaben des Benutzers besonders gut realisiert werden.

Eine weitere vorteilhafte Ausführungsform der Erfindung sieht vor, dass als Betriebsparameter ein Lastband des Akkupacks zielvorgabenspezifisch hinsichtlich eines maximal zulässigen Stroms und/oder einer maximal zulässigen Spannungsänderungsgeschwindigkeit eingestellt wird. So können zielvorgabenspezifisch beispielsweise maximal zugelassene stationäre, also länger anhaltende, Ströme entsprechend angepasst beziehungsweise begrenzt werden. Zudem können zielvorgabenspezifisch beispielsweise auch kurzzeitig zulässige Ströme im Hinblick auf kurzzeitige Stromspitzen angepasst werden. Die maximal zulässigen Ströme können dabei zudem auch hinsichtlich ihrer maximal zulässigen zeitlichen Dauern angepasst werden. Alternativ oder zusätzlich können zielvorgabenspezifisch auch maximal zulässige Spanungsänderungsgeschwindigkeiten, also die zeitliche Ableitung der Spannung nach der Zeit, dU/dt, entsprechend eingestellt werden. Durch zielvorgabenspezifische Anpassung des Lastbands des Akkupacks ist es ebenfalls möglich, die auswählbaren Zielvorgaben besonders gut zu erfüllen.

Gemäß einer weiteren vorteilhaften Ausführungsform der Erfindung ist es vorgesehen, dass der Betriebsparameter ein Ladeprogramm definiert, gemäß welchem der Akkupack aufgeladen wird. Je nach ausgewählter Zielvorgabe kann beispielsweise ein Stromwert entlang einer Programmlinie, welche das jeweilige Ladeprogramm definiert, abgesenkt oder angehoben werden. So kann zum Beispiel die Stromstärke bei einer Konstantstromladungsphase entsprechend modifiziert werden, je nachdem, was für eine Zielvorgabe ausgewählt worden ist. Durch zielvorgabenspezifische Variierung des Ladeprogramms ist es ebenfalls möglich, die ausgewählten Zielvorgaben besonders gut einzuhalten.

In weiterer vorteilhafter Ausgestaltung der Erfindung ist es vorgesehen, dass der Betriebsparameter einen maximal zulässigen Entladestrom des Akkupacks definiert. Durch zielvorgabenspezifische Anpassung des maximal zulässigen Entladestroms ist es ebenfalls möglich, die jeweils ausgewählte Zielvorgabe besonders gut zu erfüllen.

Gemäß einer weiteren vorteilhaften Ausführungsform der Erfindung ist es vorgesehen, dass der Betriebsparameter eine Ladeschlußspannung definiert. Darüber kann das Aufladeverhalten des Akkupacks zielvorgabenspezifisch angepasst werden, um die jeweils ausgewählte Zielvorgabe besonders gut zu erfüllen.

In weiterer vorteilhafter Ausgestaltung der Erfindung ist es vorgesehen, dass der Betriebsparameter eine Entladeschlußspannung definiert. Zielvorgabenspezifisch kann dadurch festgelegt werden, inwieweit der Akkupack entladen werden soll, um die jeweiligen Zielvorgaben besonders gut erfüllen zu können.

Eine weitere vorteilhafte Ausführungsform der Erfindung sieht vor, dass, falls als Zielvorgabe eine Maximierung der Lebensdauer des Akkupacks ausgewählt ist, zumindest einer dieser Betriebsparameter zielvorgabenspezifisch im Vergleich zu einem Standardwert folgendermaßen eingestellt wird:
- Die Ladeschlußspannung wird abgesenkt;
- die Entladeschlußspannung wird angehoben;
- wenigstens ein kalorischer Grenzwert wird abgesenkt, um das Ausfahren von Belastungsspitzen zu reduzieren;
- wenigstens einer im Lastband des Akkupacks definierte Obergrenze wird abgesenkt;
- angeforderte und/oder akzeptierte Ladeströme werden reduziert;
- das zulässiges Anodenpotential wird in einem engeren Potentialfenster als im Standardfall geregelt und/oder das maximal zulässiges Kathodenpotential wird verringert.

Durch Absenken der Ladeschlußspannung gegenüber einem Standardwert - welcher beispielsweise beim ausgeglichenen Betrieb eingestellt ist - kann die Lebensdauer des Akkupacks maximiert beziehungsweise erhöht werden. Dadurch, dass der Akkupack aufgrund der abgesenkten Ladeschlußspannung nicht vollständig aufgeladen wird, wird dieser besonders schonend betrieben. Durch Anheben der Entladeschlußspannung kann ebenfalls ein besonders schonender Betrieb des Akkupacks erzielt werden, infolgedessen die Lebensdauer des Akkupacks maximiert beziehungsweise erhöht werden kann. Durch Anheben der Entladeschlußspannung wird weiters sichergestellt, dass der Akkupack nicht tiefentladen wird.

Durch Absenken von zumindest einem kalorischen Grenzwert kann das Ausfahren von Belastungsspitzen beim Akkupack reduziert und somit die Lebensdauer des Akkupacks erhöht werden. Durch Absenken wenigstens einer Obergrenze, welche ein Lastband des Akkupacks definiert, kann der Akkupack ebenfalls geschont werden. Mit anderen Worten ist es also möglich, ein Lastband zu verschärfen, um eine Maximierung der Lebensdauer des Akkupacks zu erzielen.

Durch Reduzierung beziehungsweise Absenkung von angeforderten und/oder akzeptierten Ladeströmen kann ein besonders schonender Ladebetrieb des Akkupacks und somit eine Maximierung der Lebensdauer des Akkupacks erzielt werden.

Durch Kontrolle des zulässigen Anodenpotentials und/oder Kathodenpotentials kann der Akkupack ebenfalls besonders schonend betrieben werden, um zu einer Maximierung der Lebensdauer beizutragen. Beispielsweise könnten in jeweiligen Zellen des Akkupacks miniaturisierte Drähte aus metallischem Lithium als Referenzelektrode eingewickelt werden. Dadurch wäre es möglich, das Anodenpotential und/oder Kathodenpotential in Bezug auf diese Li/Li⁺-Referenzelektrode zu messen. Hintergrund dabei ist, das bestimmte Stoffe bei einem definierten elektrochemischen Potential in Lösung gehen. Z.B. besteht der Anodenstromableiter üblicherweise aus einer sehr dünnen Kupferfolie. Wenn das Anodenpotential einen Wert überschreitet, kann das Kupfer in dem Elektrolyten in Lösung gehen. Beim darauffolgenden Aufladen der Zelle scheidet sich das zuvor gelöste Kupfer auf der stark reduzierenden Anodenoberfläche ab. Dies führt zur Bildung von Kupfer-Dendriten, die in der Regel den Batterieseparator durchwachsen und zu folgenreichen Kurzschlüssen führen können. Die Wichtigkeit der Kontrolle des Elektrodenpotentials gilt in analoger Weise auch für die Kathode, wobei hier Aluminium als Stromableitermaterial eingesetzt wird. Durch Kontrolle des Anodenpotentials und/oder Kathodenpotentials kann das Risiko erheblich minimiert werden, dass die Anoden- beziehungsweise Kathodenmaterialien sich im Elektrolyten lösen (Kupfer der Anode) oder durch Legieren mit Lithium zerstört werden (Aluminium der Kathode).

In weiterer vorteilhafter Ausgestaltung der Erfindung ist es vorgesehen, dass, falls als Zielvorgabe eine Maximierung der Leistung des Akkupacks ausgewählt ist, zumindest einer dieser Betriebsparameter zielvorgabenspezifisch im Vergleich zu einem Standardwert folgendermaßen eingestellt wird:
- Die Ladeschlußspannung wird angehoben;
- die Entladeschlußspannung wird angehoben;
- wenigstens ein kalorischer Grenzwert wird angehoben, um das Ausfahren von Belastungsspitzen zu ermöglichen;
- wenigstens eine ein Lastband des Akkupacks definierende Obergröße wird angehoben;
- das minimal zulässiges Anodenpotential wird gesenkt und/oder das maximal zulässige Kathodenpotential wird angehoben.

Durch Anheben der Ladeschlußspannung und/oder Entladeschlußspannung kann die Leistungsfähigkeit des Akkupacks erhöht beziehungsweise maximiert werden. Einerseits kann der Akkupack dadurch besonders stark aufgeladen werden, wobei andererseits sichergestellt werden kann, dass der Akkupack nicht so weit entladen wird, dass die Leistung des Akkupacks zu stark nachlässt. Durch Anheben wenigstens eines kalorischen Grenzwerts, beispielsweise im Hinblick auf maximal zulässige Zellinnen- oder Zellaußentemperaturen, können im Bedarfsfall Belastungsspitzen des Akkupacks ausgefahren werden, das die Leistung des Akkupacks im Bedarfsfall maximieren kann. Ähnliches gilt, wenn man das Lastband des Akkupacks vergrößert. Wenn man im Vergleich zu einem Standardwert das Anodenpotential absenkt und/oder Kathodenpotential anhebt, kann ebenfalls die Leistungsfähigkeit des Akkupacks gesteigert werden.

Eine weitere vorteilhafte Ausführungsform der Erfindung sieht vor, dass, falls als Zielvorgabe eine Maximierung der Kapazität des Akkupacks ausgewählt ist, zumindest einer dieser Betriebsparameter als zielvorgabenspezifisch im Vergleich zu einem Standardwert folgendermaßen eingestellt wird:
- Die Ladeschlußspannung wird angehoben;
- die Entladeschlußspannung wird abgesenkt;
- tolerierte Lasten im Hinblick auf den zulässigen Entladestrom und wenigstens einen kalorischen Grenzwert werden auf einen mittleren Wert eingestellt.

Wenn der Akkupack besonders stark aufgeladen und besonders tief entladen wird, kann eine besonders hohe Kapazität des Akkupacks ausgeschöpft werden. Um dauerhaft die Kapazität des Akkupacks zu maximieren, kann es vorgesehen sein, dass beim Entladen zulässige Entladeströme und kalorische Grenzwerte weder zu hoch noch zu gering gewählt werden.

Bei dem erfindungsgemäßen Akkupack ist das darin integrierte Batteriemanagementsystem dazu eingerichtet, wenigstens einen Betriebsparameter des Akkupacks zielvorgabenspezifisch in Abhängigkeit davon einzustellen, welche von mehreren den Akkupack betreffenden unterschiedlichen Zielvorgaben ausgewählt ist. Zudem ist das Batteriemanagementsystem dazu eingerichtet, den Akkupack entsprechend des wenigstens einen zielvorgabenspezifisch eingestellten Betriebsparameters zu betreiben. Vorteilhafte Ausgestaltungen des erfindungsgemäßen Verfahrens (insbesondere oben genannte Vorrichtungsmerkmale) sind als vorteilhafte Ausgestaltungen des Akkupacks und umgekehrt anzusehen, wobei der Akkupack insbesondere Mittel zur Durchführung der Verfahrensschritte aufweist.

Eine vorteilhafte Ausführungsform des Akkupacks sieht vor, dass der Akkupack eine Auswahleinrichtung, insbesondere einen Schalter und/oder Taster, zum Auswählen der unterschiedlichen Zielvorgaben aufweist. So kann ein Benutzer auf besonders einfache Weise direkt am Akkupack die entsprechende Zielvorgabe tätigen, beispielsweise die Maximierung der Lebensdauer, der Leistung oder der Kapazität des Akkupacks als Zielvorgabe auswählen.

Schließlich sieht eine weitere vorteilhafte Ausführungsform des Akkupacks vor, dass der Akkupack eine Kommunikationseinrichtung aufweist, welche dazu ausgelegt ist, eine Auswahl von einer der Zielvorgaben drahtlos zu empfangen. So kann die Kommunikationseinrichtung beispielsweise dazu ausgelegt sein, via Narrowband lot drahtlos eine Zielvorgabe eines Benutzers zu empfangen, welcher der Benutzer beispielsweise browserbasiert oder an einer App seines Smartphones eingegeben hat. Grundsätzlich kann die Kommunikationseinrichtung dazu ausgelegt sein, die Zielvorgaben von Benutzern über verschiedenste drahtlose Wege, beispielsweise auch über WLAN, Bluetooth oder dergleichen, zu empfangen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht eines Akku-Bohrschraubers; und in
- Fig. 2: eine stark schematisierte Darstellung eines Akkupacks für den Akku-Bohrschrauber.

In den Figuren sind gleiche oder funktionsgleiche Elemente mit den gleichen Bezugszeichen versehen worden.

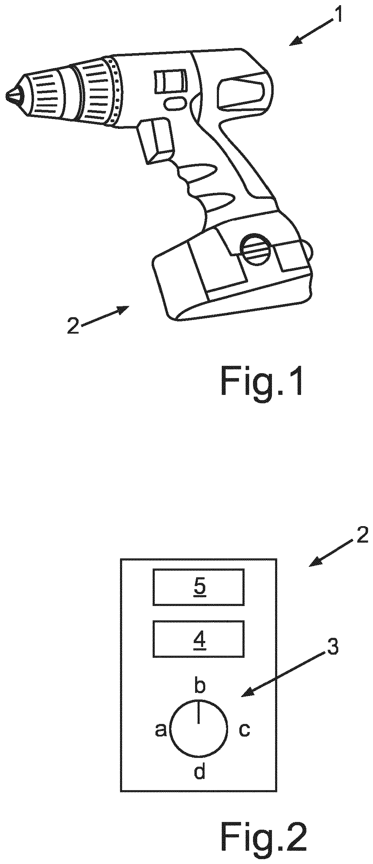

Ein Elektrogerät in Form eines Akku-Bohrschraubers 1 ist in einer Perspektivansicht in Fig. 1 gezeigt. Am Akku-Bohrschrauber 1 ist werkzeuglos auswechselbar ein Akkupack 2 angebracht, welcher zur Energieversorgung des Akku-Bohrschraubers 1 dient. Speziell besitzt der Akkupack ein eigenes, hier nicht näher bezeichnetes Gehäuse, das eine elektromechanische Schnittstelle aufweist. Mit dieser Schnittstelle kann der Akkupack elektrisch und mechanisch mit dem zu versorgenden Gerät (hier Akku-Bohrschrauber 1) verbunden werden. Der Akkupack 2 kann beispielsweise mehrere Lithium-Ionen-Zellen zur Energiebereitstellung aufweisen. Andere Zelltechnologien sind ebenfalls möglich. Die nachfolgenden Erläuterungen gelten nicht nur für ein Elektrogerät in Form des Akku-Bohrschraubers 1, sondern generell für beliebige Elektrogeräte, wie beispielsweise Elektrowerkzeuge jeglicher Art, stationäre Maschinen, Reinigungsgeräte, Gartengeräte, Wasserpumpen und dergleichen.

In Fig. 2 ist der Akkupack 2 in einer stark schematisierten Darstellung gezeigt. Der Akkupack 2 umfasst vorzugsweise als integralen Bestandteil an dem Gehäuse eine Auswahleinrichtung 3 - vorliegend schematisch als Drehscheibe dargestellt - zum Auswählen verschiedener Zielvorgaben a), b), c), d) im Hinblick auf den Akkupack 2. Die Zielvorgabe a) betrifft eine Maximierung der Lebensdauer des Akkupacks 2, die Zielvorgabe b) eine Maximierung der Leistung des Akkupacks 2, die Zielvorgabe c) eine Maximierung der Kapazität des Akkupacks 2 und die Zielvorgabe d) einen ausgeglichenen Betrieb, bei welchem zumindest zwei der Zielvorgaben a) bis c) gleichermaßen erfüllt werden sollen.

Ein Benutzer kann also direkt am Akkupack 2 über die Auswahleinrichtung 3 aus den unterschiedlichen Zielvorgaben a) bis d) wählen. So kann er direkt Einfluss darauf nehmen, wie lange der Akkupack 2 hält, wie leistungsoptimiert der Akkupack 2 gerade betrieben werden soll oder ob eine besonders große Kapazität des Akkupacks 2 im Vordergrund steht. Falls sich der Benutzer nicht entscheiden kann, kann er auch die Zielvorgabe d) auswählen, welche einen ausgeglichenen Betrieb im Hinblick auf die Zielvorgaben a) bis c) bedeuten kann.

Der Akkupack 2 umfasst in einer speziellen Ausführungsform in seinem Gehäuse zudem eine Kommunikationseinrichtung 4, welche dazu ausgelegt ist, eine Auswahl von einer der Zielvorgaben a) bis d) drahtlos zu empfangen. So ist es beispielsweise möglich, dass ein Benutzer an einem Browser eines PCs oder beispielsweise über eine App seines Smartphones oder Tablet-Computers eine der Zielvorgaben a) bis d) auswählt, wobei diese Auswahl drahtlos an die Kommunikationseinrichtung 4 übermittelt wird. Dies kann beispielsweise über Narrowband loT oder auch über andere drahtlose Technologien, wie beispielsweise WLAN, Bluetooth oder dergleichen, erfolgen. Zudem ist es auch möglich, dass der Benutzer am Akku-Bohrschrauber 1 ebenfalls eine Auswahleinrichtung vorfindet, mittels welcher er die unterschiedlichen Zielvorgaben a) bis d) vornehmen beziehungsweise auswählen kann.

Der Akkupack 2 umfasst zudem integriert in sein Gehäuse ein Batteriemanagementsystem 5, welches dazu eingerichtet ist, wenigstens einen Betriebsparameter des Akkupacks 2 zielvorgabenspezifisch in Abhängigkeit davon einzustellen, welche von den mehreren den Akkupack 2 betreffenden unterschiedlichen Zielvorgaben a) bis d) der Benutzer gerade ausgewählt hat. Das Batteriemanagementsystem 5 kann dann zudem den Akkupack 2 entsprechend dem wenigstens einen zielvorgabenspezifisch eingestellten Betriebsparameter selbstständig betreiben. D.h. der Akkupack bildet ein sich zumindest hinsichtlich der gewählten Zielvorgabe eigenständig verwaltendes Modul.

Wählt der Benutzer als Zielvorgabe beispielsweise eine Maximierung der Lebensdauer des Akkupacks 2, so kann es vorgesehen sein, dass die Ladeschlußspannung des Akkupacks 2 abgesenkt und die Entladeschlußspannung angehoben wird. Das Absenken beziehungsweise Anheben ist dabei auf einen Standardwert bezogen, welcher beispielsweise beim ausgeglichenen Betrieb, also bei der Zielvorgabe d), eingestellt wird. Durch Absenken der Ladeschlußspannung und durch Anheben der Entladeschlußspannung wird der Akkupack 2 sowohl beim Aufladen als auch beim Entladen geschont. Denn einerseits wird der Akkupack 2 nicht maximal aufgeladen und andererseits auch nicht zu stark entladen, was den Akkupack 2, also die darin enthaltenen Zellen, schont. Zudem kann auch wenigstens ein kalorischer Grenzwert gegenüber einer Standardeinstellung beziehungsweise einem Standardwert abgesenkt werden, um das Ausfahren von Belastungsspitzen zu reduzieren. So können beispielsweise beim Betrieb des Akkupacks 2 zulässige Grenzwerte im Hinblick auf eine Oberflächentemperatur jeweiliger Zellen des Akkupacks 2 oder Zellinnentemperaturen gegenüber einem Standardwert abgesenkt werden. Der Akkupack 2 wird also dann mittels des Batteriemanagementsystems 5 nur so betrieben, dass diese kalorischen Grenzwerte nicht überschritten werden. Dadurch kann der Akkupack 2 ebenfalls entsprechend geschont werden, was zu einer Maximierung der Lebensdauer des Akkupacks 2 beiträgt. Falls eine Maximierung der Lebensdauer des Akkupacks 2 ausgewählt sein wollte, kann auch wenigstens eine ein Lastband des Akkupacks 2 definierende Obergrenze gegenüber einem Standardwert abgesenkt werden. So können beispielsweise maximal zulässige Ströme - seien es stationäre Werte oder auch kurzzeitige Spitzenwerte - heruntergesetzt werden. Zudem ist es auch möglich, eine maximal zulässige Spannungsänderungsgeschwindigkeit du/dt gegenüber einem Standardwert zu reduzieren. Diese Maßnahmen tragen ebenfalls dazu bei, die Lebensdauer des Akkupacks 2 zu verlängern. Im Hinblick auf die Maximierung der Lebensdauer des Akkupacks 2 kann das Batteriemanagementsystem 5 auch ein engeres Fenster für das Anodenpotential und/oder Kathodenpotential gegenüber einem Standardwert vorgeben. Dadurch kann das Risiko reduziert werden, dass Materialien der Anode und/oder Kathode in Lösung gehen und/oder zerstört werden und somit die Sicherheit der Zelle gefährdet wird.

Wählt der Benutzer die Zielvorgabe b), also die Maximierung der Leistung des Akkupacks 2, aus, so kann es beispielsweise vorgesehen sein, dass das Batteriemanagementsystem 5 gegenüber einem Standardwert die Ladeschlußspannung anhebt und die Entladeschlußspannung ebenfalls anhebt. Einerseits kann der Akkupack 2 dadurch besonders stark aufgeladen und andererseits sichergestellt werden, dass der Akkupack 2 nicht so weit entladen wird, dass keine ausreichende Leistung mehr zur Verfügung steht. Im Hinblick auf kalorische Grenzwerte wird vorzugsweise genau umgekehrt vorgegangen, wie wenn die Lebensdauer des Akkupacks 2 maximiert werden soll. Sprich, kalorische Grenzwerte, zum Beispiel Oberflächentemperaturen von Batteriezellen oder Zellinnentemperaturen werden gegenüber einem Standardwert angehoben, um das Ausfallen von Belastungsspitzen zu ermöglichen. Dadurch kann der Akkupack 2 bei Bedarf besonders große Leistungen bereitstellen. Zudem können auch ein Lastband des Akkupacks 2 definierende Obergrenzen angehoben werden, sodass der Akkupack 2 bei Bedarf besonders viel Leistung abgegeben kann. Gleiches kann dadurch erzielt werden, indem das minimal zulässige Anodenpotential abgesenkt und/oder das maximal zulässige Kathodenpotential gegenüber einem Standardwert angehoben wird.

Falls der Benutzer die Zielvorgabe c), also die Maximierung der Kapazität, des Akkupacks 2 ausgewählt hat, kann beispielsweise die Ladeschlußspannung angehoben werden, wobei die Entladeschlußspannung abgesenkt wird. Der Akkupack 2 kann also gegenüber einer Standardeinstellung stärker aufgeladen und stärker entladen werden, sodass eine besonders hohe Kapazität des Akkupacks 2 zur Verfügung steht. Zudem kann es vorgesehen sein, tolerierte Lasten im Hinblick auf den zulässigen Entladestrom und wenigstens einen kalorischen Grenzwert auf einen mittleren Wert einzustellen, wodurch dauerhaft eine Maximierung der Kapazität des Akkupacks 2 begünstigt wird.

Einem Benutzer eines Elektrogeräts - am Beispiel des Akku-Bohrschraubers 1 erläutert - wird also eine Möglichkeit bereitgestellt, aus verschiedensten Zielvorgaben a) bis d) zu wählen, wobei je nach ausgewählter Zielvorgabe a) bis d) das Batteriemanagementsystem 5 dafür sorgt, dass die ausgewählte Zielvorgabe a), b), c), d) durch entsprechende Parametrisierung des Akkupacks 2 bestmöglich erfüllt wird.

Dadurch kann ein Benutzer ohne genauere Kenntnis der vielfältigen Faktoren, welche sich auf die Lebensdauer, Leistung und Kapazität des Akkupacks 2 auswirken, die gerade für ihn passendste Zielvorgabe a) bis d) auswählen, welche dann das Batteriemanagementsystem 5 des Akkupacks 2 automatisch bestmöglich umsetzt.

### BEZUGSZEICHENLISTE:

1 Akku-Bohrschrauber
2 Akkupack
3 Auswahleinrichtung des Akkupacks
4 Kommunikationseinrichtung des Akkupacks
5 Batteriemanagementsystem des Akkupacks
   a) Zielvorgabe zur Maximierung der Lebensdauer des Akkupacks
   b) Zielvorgabe zur Maximierung der Leistung des Akkupacks
   c) Maximierung der Kapazität des Akkupacks
   d) Zielvorgabe im Hinblick auf einen ausgeglichen Betrieb des Akkupacks

## Patentansprüche

1. Verfahren zum Betreiben eines Akkupacks (2), der ein Gehäuse einschließlich einer elektromechanischen Schnittstelle zum Anstecken an ein Elektrowerkzeug, eine stationäre Maschine, ein Reinigungsgerät oder ein Gartengerät besitzt, mit den Schritten:
- Bereitstellen mehrerer unterschiedlicher von einem Benutzer auswählbarer Zielvorgaben betreffend den Akkupack (2);
- zielvorgabenspezifisches Einstellen wenigstens eines Betriebsparameters des Akkupacks (2) mittels eines Batteriemanagementsystems (5), das in das Gehäuse des Akkupacks (2) integriert ist, in Abhängigkeit davon, welche der Zielvorgaben ausgewählt ist;
**gekennzeichnet durch** den Verfahrensschritt:
- Betreiben des Akkupacks (2) mittels des Batteriemanagementsystems (5), das den Akkupack selbstständig steuert und/oder regelt, entsprechend dem zielvorgabenspezifisch eingestellten Betriebsparameter.

2. Verfahren nach dem vorhergehenden Anspruch,
**dadurch gekennzeichnet, dass**
wenigstens folgende Zielvorgaben zur Auswahl bereitgestellt werden:
a) Maximierung der Lebensdauer des Akkupacks (2);
b) Maximierung der Leistung des Akkupacks (2);
c) Maximierung der Kapazität des Akkupacks (2);
d) ein ausgeglichener Betrieb, bei welchem zumindest zwei der unter den Punkten a) bis c) genannten Ziele gleichermaßen erfüllt werden sollen.

3. Verfahren nach einem der vorhergehenden Ansprüche,
**dadurch gekennzeichnet, dass**
als Betriebsparameter wenigstens ein kalorischer Grenzwert eines Betriebs des Akkupacks (2), insbesondere eine maximal zulässige Zelltemperatur des Akkupacks (2), zielvorgabenspezifisch eingestellt wird.

4. Verfahren nach einem der vorhergehenden Ansprüche,
**dadurch gekennzeichnet, dass**
als Betriebsparameter ein Lastband des Akkupacks (2) zielvorgabenspezifisch hinsichtlich eines maximal zulässigen Stroms und/oder einer maximal zulässigen Spannungsänderungsgeschwindigkeit eingestellt wird.

5. Verfahren nach einem der vorhergehenden Ansprüche,
**dadurch gekennzeichnet, dass**
der Betriebsparameter ein Ladeprogramm definiert, gemäß welchem der Akkupack (2) aufgeladen wird.

6. Verfahren nach einem der vorhergehenden Ansprüche,
**dadurch gekennzeichnet, dass**
der Betriebsparameter einen maximal zulässigen Entladestrom des Akkupacks (2) definiert.

7. Verfahren nach einem der vorhergehenden Ansprüche,
**dadurch gekennzeichnet, dass**
der Betriebsparameter eine Ladeschlußspannung definiert.

8. Verfahren nach einem der vorhergehenden Ansprüche,
**dadurch gekennzeichnet, dass**
der Betriebsparameter eine Entladeschlußspannung definiert.

9. Verfahren nach einem der vorhergehenden Ansprüche,
**dadurch gekennzeichnet, dass**
falls als Zielvorgabe eine Maximierung der Lebensdauer des Akkupacks (2) ausgewählt ist, zumindest einer dieser Betriebsparameter zielvorgabenspezifisch im Vergleich zu einem Standardwert folgendermaßen eingestellt wird:
- die Ladeschlußspannung wird abgesenkt;
- die Entladeschlußspannung wird angehoben;
- wenigstens ein kalorischer Grenzwert wird abgesenkt, um das Ausfahren von Belastungsspitzen zu reduzieren;
- wenigstens eine ein Lastband des Akkupacks (2) definierende Obergrenze wird abgesenkt;
- angeforderte und/oder akzeptierte Ladeströme werden reduziert;
- die Breite des Fensters des zulässiges Anodenpotentials und/oder das maximal zulässige Kathodenpotential wird verringert.

10. Verfahren nach einem der vorhergehenden Ansprüche,
**dadurch gekennzeichnet, dass**
falls als Zielvorgabe eine Maximierung der Leistung des Akkupacks (2) ausgewählt ist, zumindest einer dieser Betriebsparameter zielvorgabenspezifisch im Vergleich zu einem Standardwert folgendermaßen eingestellt wird:
- die Ladeschlußspannung wird angehoben;
- die Entladeschlußspannung angehoben;
- wenigstens ein kalorischer Grenzwert wird angehoben, um das Ausfahren von Belastungsspitzen zu ermöglichen;
- wenigstens eine ein Lastband des Akkupacks (2) definierende Obergrenze wird angehoben;
- das minimal zulässige Anodenpotential wird abgesenkt und/oder maximal zulässige Kathodenpotential wird angehoben.

11. Verfahren nach einem der vorhergehenden Ansprüche,
**dadurch gekennzeichnet, dass**
falls als Zielvorgabe eine Maximierung der Kapazität des Akkupacks (2) ausgewählt ist, zumindest einer dieser Betriebsparameter zielvorgabenspezifisch im Vergleich zu einem Standardwert folgendermaßen eingestellt wird:
- die Ladeschlußspannung wird angehoben;
- die Entladeschlußspannung wird abgesenkt;
- tolerierte Lasten im Hinblick auf den zulässigen Entladestrom und wenigstens einen kalorischen Grenzwert werden auf einen mittleren Wert eingestellt.
- das minimal zulässige Anodenpotential wird abgesenkt und/oder maximal zulässige Kathodenpotential wird angehoben.
- das maximal zulässige Anodenpotential wird angehoben und/oder minimal zulässige Kathodenpotential wird abgesenkt.

12. Akkupack (2) mit
- einem Gehäuse einschließlich einer elektromechanischen Schnittstelle zum Anstecken an ein Elektrowerkzeug, eine stationäre Maschine, ein Reinigungsgerät oder ein Gartengerät besitzt und
- einem in das Gehäuse integrierten Batteriemanagementsystem (5), wobei das Batteriemanagementsystem (5) dazu eingerichtet ist,
- wenigstens einen Betriebsparameter des Akkupacks (2) zielvorgabenspezifisch in Abhängigkeit davon einzustellen, welche von mehreren den Akkupack (2) betreffenden unterschiedlichen Zielvorgaben ausgewählt ist;
**dadurch gekennzeichnet, dass** das Batteriemanagementsystem (5) dazu eingerichtet ist
- den Akkupack (2) entsprechend dem wenigstens einen zielvorgabenspezifisch eingestellten Betriebsparameter selbstständig zu steuern und/oder zu regeln.

13. Akkupack (2) nach Anspruch 12,
**dadurch gekennzeichnet, dass**
der Akkupack (2) eine Auswahleinrichtung (3), insbesondere einen Schalter und/oder Taster, zum Auswählen der unterschiedlichen Zielvorgaben aufweist.

14. Akkupack nach Anspruch 12 oder 13,
**dadurch gekennzeichnet, dass**
der Akkupack (2) eine Kommunikationseinrichtung (4) aufweist, welche dazu ausgelegt ist, eine Auswahl von einer der Zielvorgaben drahtlos zu empfangen.

## Claims

1. A method for operating a battery pack (2) comprising a housing including an electromechanical interface for connecting to an electric tool, a stationary machine, a cleaning appliance, or a gardening tool, the method comprising the steps:
- providing multiple different target settings relating to the battery pack (2), which are selectable by a user;
- target-specific setting of at least one operating parameter of the battery pack (2) by a battery management system (5), which is integrated into the housing of the battery pack (2), depending on which of the target settings is selected;
**characterized by** the method step:
- operating the battery pack (2) by the battery management system (5), which controls and/or regulates the battery pack autonomously, according to the target-specifically set operating parameter.

2. The method according to the preceding claim,
**characterized in that**
at least the following target settings are provided for selection:
a) maximizing the lifetime of the battery pack (2);
b) maximizing the power of the battery pack (2);
c) maximizing the capacity of the battery pack (2);
d) a balanced operation, in which at least two of the targets named under points a) to c) are to be met in equal measure.

3. The method according to any one of the preceding claims,
**characterized in that**
as operating parameter at least one caloric limit value of an operation of the battery pack (2), in particular a maximally admissible cell temperature of the battery pack (2), is set target-specifically.

4. The method according to any one of the preceding claims,
**characterized in that**
as operating parameter a load range of the battery pack (2) is set target-specifically with regard to a maximally admissible current and/or a maximally admissible voltage change rate.

5. The method according to any one of the preceding claims,
**characterized in that**
the operating parameter defines a charging program according to which the battery pack (2) is charged.

6. The method according to any one of the preceding claims,
**characterized in that**
the operating parameter defines a maximally admissible discharge current of the battery pack (2).

7. The method according to any one of the preceding claims,
**characterized in that**
the operating parameter defines a charging end voltage.

8. The method according to any one of the preceding claims,
**characterized in that**
the operating parameter defines a discharging end voltage.

9. The method according to any one of the preceding claims,
**characterized in that**
in case as target setting a maximizing of the lifetime of the battery pack (2) is selected, at least one of these operating parameters is set target-specifically in comparison to a standard value as follows:
- the charging end voltage is lowered;
- the discharging end voltage is raised;
- at least one caloric limit value is lowered in order to reduce the running through load peaks;
- at least one top limit defining a load range of the battery pack (2) is lowered;
- requested and/or accepted charging currents are reduced;
- the width of the window of the admissible anode potential and/or the maximally admissible cathode potential is reduced.

10. The method according to any one of the preceding claims,
**characterized in that**
in case as target setting a maximizing of the power of the battery pack (2) is selected, at least one of these operating parameters is set target-specifically in comparison to a standard value as follows:
- the charging end voltage is raised;
- the discharging end voltage is raised;
- at least one caloric limit value is raised in order to facilitate the running through load peaks;
- at least one top limit defining a load range of the battery pack (2) is raised;
- the minimally admissible anode potential is lowered and/or the maximally admissible cathode potential is raised.

11. The method according to any one of the preceding claims,
**characterized in that**
in case as target setting a maximizing of the capacity of the battery pack (2) is selected, at least one of these operating parameters is set target-specifically in comparison to a standard value as follows:
- the charging end voltage is raised;
- the discharging end voltage is lowered;
- tolerated loads with regard to the admissible discharge current and at least one caloric limit value are set to a medium value;
- the minimally admissible anode potential is lowered and/or the maximally admissible cathode potential is raised;
- the maximally admissible anode potential is raised and/or the minimally admissible cathode potential is lowered.

12. A battery pack (2) comprising
- a housing including an electromagnetic interface for connecting to an electric tool, a stationary machine, a cleaning appliance, or a gardening tool, and
- a battery management system (5) integrated into the housing, wherein the battery management system (5) is configured to
- set at least one operating parameter of the battery pack (2) target-specifically depending on which of multiple different target settings relating to the battery pack (2) is selected;
**characterized in that** the battery management system (5) is configured to
- control and/or regulate the battery pack (2) autonomously according to the at least one target-specifically set operating parameter.

13. The battery pack (2) according to claim 12,
**characterized in that**
the battery pack (2) comprises a selection device (3), in particular a switch and/or push button for selecting the different target settings.

14. The battery pack according to claim 12 or 13,
**characterized in that**
the battery pack (2) comprises a communication device (4), which is configured to wirelessly receive a selection of one of the target settings.

## Revendications

1. Procédé pour faire fonctionner un bloc d'accumulateurs (2), qui possède un boîtier incluant une interface électromécanique servant à l'attachement à un outil électrique, une machine fixe, un appareil de nettoyage ou un appareil de jardinage, comprenant les étapes suivantes :
- fourniture de plusieurs objectifs prédéfinis concernant le bloc d'accumulateurs (2), qui peuvent être sélectionnés par un utilisateur ;
- réglage spécifique à l'objectif prédéfini d'au moins un paramètre de fonctionnement du bloc d'accumulateurs (2) au moyen d'un système de gestion de batterie (5) qui est intégré dans le boîtier du bloc d'accumulateurs (2) en fonction de l'objectif prédéfini qui est sélectionné ; **caractérisé par** l'étape suivante :
- mise en fonctionnement du bloc d'accumulateurs (2) au moyen du système de gestion de batterie (5), qui commande et/ou régule le bloc d'accumulateurs de manière autonome, conformément au paramètre de fonctionnement spécifique à l'objectif prédéfini.

2. Procédé selon la revendication précédente, **caractérisé en ce qu'**au moins les objectifs prédéfinis suivants sont fournis pour la sélection :
a) maximisation de la durée de vie du bloc d'accumulateurs (2) ;
b) maximisation de la puissance du bloc d'accumulateurs (2) ;
c) maximisation de la capacité du bloc d'accumulateurs (2)
d) un fonctionnement équilibré, avec lequel au moins deux des objectifs mentionnés aux alinéas a) à c) doivent être réalisés.

3. Procédé selon l'une des revendications précédentes, **caractérisé en ce que** le paramètre de fonctionnement réglé est au moins une valeur limite calorique d'un fonctionnement du bloc d'accumulateurs (2), notamment une température de cellule maximale admissible du bloc d'accumulateurs (2) spécifique à l'objectif prédéfini.

4. Procédé selon l'une des revendications précédentes, **caractérisé en ce que** le paramètre de fonctionnement réglé est une bande de charge du bloc d'accumulateurs (2) spécifique à l'objectif prédéfini du point de vue d'un courant maximal admissible et/ou d'une vitesse de variation de tension maximale admissible.

5. Procédé selon l'une des revendications précédentes, **caractérisé en ce que** le paramètre de fonctionnement définit un programme de charge conformément auquel le bloc d'accumulateurs (2) est chargé.

6. Procédé selon l'une des revendications précédentes, **caractérisé en ce que** le paramètre de fonctionnement définit un courant de décharge maximal admissible du bloc d'accumulateurs (2).

7. Procédé selon l'une des revendications précédentes, **caractérisé en ce que** le paramètre de fonctionnement définit une tension finale de charge.

8. Procédé selon l'une des revendications précédentes, **caractérisé en ce que** le paramètre de fonctionnement définit une tension finale de décharge.

9. Procédé selon l'une des revendications précédentes, **caractérisé en ce que**
dans le cas où l'objectif prédéfini sélectionné est une maximisation de la durée de vie du bloc d'accumulateurs (2), au moins l'un de ces paramètres de fonctionnement est réglé de la manière suivante en comparaison d'une valeur standard :
- la tension finale de charge est abaissée ;
- la tension finale de décharge est relevée ;
- au moins une valeur limite calorique est abaissée afin de réduire le déploiement de pics de charge ;
- au moins une limite supérieure définissant une bande de charge du bloc d'accumulateurs (2) est abaissée ;
- les courants de charge sollicités et/ou acceptés sont réduits ;
- la largeur de la fenêtre du potentiel d'anode admissible et/ou du potentiel de cathode maximal admissible est réduite.

10. Procédé selon l'une des revendications précédentes, **caractérisé en ce que**
dans le cas où l'objectif prédéfini sélectionné est une maximisation de la puissance du bloc d'accumulateurs (2), au moins l'un de ces paramètres de fonctionnement est réglé de la manière suivante en comparaison d'une valeur standard :
- la tension finale de charge est relevée ;
- la tension finale de décharge est relevée ;
- au moins une valeur limite calorique est relevée afin de permettre le déploiement de pics de charge ;
- au moins une limite supérieure définissant une bande de charge du bloc d'accumulateurs (2) est relevée ;
- le potentiel d'anode minimal admissible est abaissé et/ou le potentiel de cathode maximal admissible est relevé.

11. Procédé selon l'une des revendications précédentes, **caractérisé en ce que**
dans le cas où l'objectif prédéfini sélectionné est une maximisation de la capacité du bloc d'accumulateurs (2), au moins l'un de ces paramètres de fonctionnement est réglé de la manière suivante en comparaison d'une valeur standard :
- la tension finale de charge est relevée ;
- la tension finale de décharge est abaissée ;
- les charges tolérées du point de vue du courant de décharge admissible et au moins une valeur limite calorique sont réglées à une valeur moyenne ;
- le potentiel d'anode minimal admissible est abaissé et/ou le potentiel de cathode maximal admissible est relevé ;
- le potentiel d'anode maximal admissible est relevé et/ou le potentiel de cathode minimal admissible est abaissé.

12. Bloc d'accumulateurs (2), comprenant
- un boîtier incluant une interface électromécanique servant à l'attachement à un outil électrique, une machine fixe, un appareil de nettoyage ou un appareil de jardinage et
- un système de gestion de batterie (5) qui est intégré dans le boîtier, le système de gestion de batterie (5) étant conçu pour
- régler spécifiquement à l'objectif prédéfini au moins un paramètre de fonctionnement du bloc d'accumulateurs (2) en fonction duquel des plusieurs objectifs prédéfinis concernant le bloc d'accumulateurs (2) est sélectionné ;
**caractérisé en ce que** le système de gestion de batterie (5) est conçu pour
- commander et/ou réguler le bloc d'accumulateurs (2) de manière autonome, conformément à l'au moins un paramètre de fonctionnement spécifique à l'objectif prédéfini.

13. Bloc d'accumulateurs (2) selon la revendication 12, **caractérisé en ce que** le bloc d'accumulateurs (2) possède un dispositif de sélection (3), notamment un commutateur et/ou une touche, pour sélectionner les différents objectifs prédéfinis.

14. Bloc d'accumulateurs selon la revendication 12 ou 13, **caractérisé en ce que** le bloc d'accumulateurs (2) possède un dispositif de communication (4) qui est conçu pour recevoir sans fil une sélection de l'un des objectifs prédéfinis.
